# EUROPEAN PATENT APPLICATION

(11) **EP 1 011 103 A1**
(43) Date of publication of application: **21.06.2000**
(21) Application number: 98204172.5
(22) Date of filing: 08.12.1998
(51) Int. Cl.: G11B 20/00, G06F 1/00, G11B 23/28

(54) **Copy protection for CD-ROM**

(71) Applicant: Metatec International B.V., 4815 HK Breda (NL)
(72) Inventor: van Leemput, Petrus Eduardus Maria, 4421 AP Kapelle (NL)
(74) Representative: Griebling, Onno

(57) **Abstract**

A description is given of a method for recording an application on a CD-ROM in such a manner that copying the said CD-ROM to a CD-R results in an application which does not function normally or even does not function at all. According to the invention, this is achieved by the fact that an authenticity code (CODE) is recorded in the CD-ROM, preferably in the area (2) beyond 74 minutes, preceded by and followed by scrambled information, it being possible for the scrambling to comprise blocks (30) with a header section (31) which is not coded in accordance with the standard. A standard CD-ROM station is then unable to access the authenticity code (CODE) and therefore cannot copy it during a standard copy instruction.

A verification routine (VER) which investigates whether the authenticity code (CODE) is present is added to the application (APPL). If this code is found, an original CD-ROM is present and the application functions normally. If the code is not found, it is clear that it is not an original CD-ROM and the application functions in a non-normal mode.

## Description

The present invention relates in general terms to the protection of an information carrier against illegal copying. The present invention relates in particular, but not exclusively, to preventing illegal copies of CD-ROMs being made, for which reason the present invention will be explained specifically for this application. However, it is expressly pointed out that the present invention may also be used for other recording media.

As is known, hardware allowing the consumer to himself store information on CDs is currently available. These consumer-writable CDs are known as CD-R (recordable) or CD-RW (rewritable) . Such hardware can be used not only to make audio disks as individually compiled collections of favourite pieces of music, but also to store computer files. For this reason, it has also proven possible to make a complete copy of an original CD-ROM at low cost. For the supplier of the original software on CD-ROM, this is an undesirable situation.

A copy CD can be externally distinguished from an original CD, because the original CD will be a CD-ROM, while copy CDs will be a CD-R or CD-RW. In visual terms, they are even of different colours. It is therefore relatively easy to check the authenticity of a suspect CD. However, this is not sufficient to prevent illegal copying of CD-ROMs. The present invention aims to reduce the above problem of illegal copying of original CD-ROMs by writing the CD-ROMs in such a manner that illegal copying is made more difficult and/or illegal copies will be able to function only incompletely, or will not be able to function at all.

According to an important aspect of the present invention, at least part of the information which is to be recorded on a recording medium is recorded in such a manner that the said part is not copied during a standard copying process.

In a first elaboration of this inventive idea, for this purpose a read barrier is arranged in front of the said part of the information to be recorded. A standard copying process will end automatically on reaching the said read barrier, so that on a copy information carrier the said part of the information to be recorded will be missing.

According to another elaboration of the inventive idea, an original CD-ROM is provided with an authenticity code, specifically in such a manner that this code is not copied in a standard copying process. This authenticity code is therefore absent from a copy on CD-R or CD-RW.

According to a further important aspect of the present invention, a verification routine which is designed to read the said authenticity code is added to an application which is to be recorded on the CD-ROM. If the said code is not found, the application does not function or functions only partially.

The present invention will be explained in more detail by means of the following detailed description of an exemplary embodiment thereof, with reference to the drawing, in which:
figure 1A diagrammatically illustrates the information which is to be recorded on a CD-ROM;
figure 1B diagrammatically illustrates the information which has been adapted according to the invention;
figure 1C diagrammatically illustrates recording areas of a CD-ROM;
figure 1D diagrammatically illustrates recording areas of a CD-R;
figure 2 diagrammatically illustrates the scrambling of a data block;
figure 3 diagrammatically illustrates the structure of a copy-protected recording of an authenticity code according to a preferred embodiment of the present invention; and
figure 4A diagrammatically illustrates an alternative embodiment of information which is to be recorded on a CD-ROM,
while figure 4B illustrates the structure of the information recorded on a CD-R as a copy of the information of figure 4A.

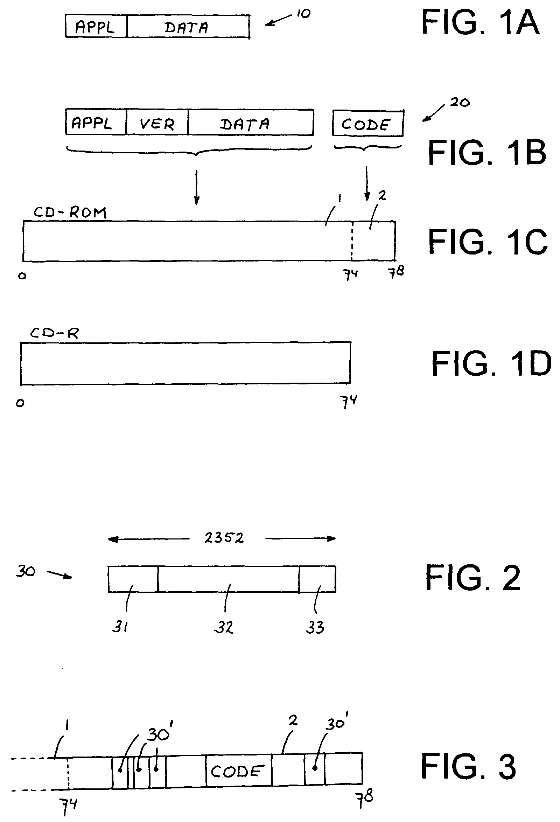

Since the physics behind reading and writing CDs, and the numerous variants thereof, such as CD-ROM, CD-R and CD-RW, is known per se and lies outside the scope of the present invention, this will not be explained any further here. It is sufficient here to point out that the information on a CD is written in digital form in a continuous track which is in the form of a spiral or a multiplicity of concentric circles, but which is diagrammatically depicted in Figures 1C-D as a straight bar. Although the factor of primary importance for a CD-ROM is how many bits of information can be recorded thereon, it is usual to express the quantity of information in minutes, corresponding to the play time which an audio CD containing the same amount of information would have. Therefore, in the following text the physical location of a specific information recording will be expressed in minutes.

CDs are standardized. The Red Book specification relating to CDs assumes a maximum information storage of 74 minutes. However, in physical terms a CD-ROM allows up to 78 minutes to be stored. The area from 0 to 74 minutes according to the Red Book specification will be referred to by the term "standard recording area 1", while the area beyond 74 minutes will be referred to by the term "standard-exceeding recording area 2" (see Figure 1C) . As is known, a CD-R(ecordable) has a recording area in the form of a predefined "groove" in which a user can record his information, the length of which groove is 74 minutes, as indicated in Figure 1D. Only 74 minutes of information can therefore be recorded on a CD-R.

An original CD-ROM normally also contains no more than 74 minutes of information; in such a case, it is in principle possible to make an exact one-to-one copy of the CD-ROM onto a CD-R. If a CD-ROM contains more information than 74 minutes, it is not possible to make an exact one-to-one copy of the CD-ROM onto a standard CD-R, simply because it does not fit.

Figure 1A illustrates the information 10 which is to be recorded on a CD-ROM. In the following description, this information 10 will also be referred to by the term "actual information". In the example illustrated, the actual information 10 comprises an application (computer program) APPL and data DATA.

According to an important aspect of the present invention, additional information is added to the actual information 10. This additional information comprises an authenticity code CODE and a verification routine VER which is added to the application APPL. This verification routine VER is incorporated in the application APPL by the software supplier, specifically in such a manner that when the application APPL is started up the verification routine VER is automatically activated, as will be explained below. The combination of the actual information 10 and the additional information will be referred to by the term "information 20 which is to be recorded" (see Figure 1B). Furthermore, the combination of the application APPL and the verification routine VER will be referred to by the term modified application MODAPPL.

According to a further important aspect of the present application, the modified application MODAPPL and the data DATA are recorded in the standard recording area 1 of an original CD-ROM, and the authenticity code CODE is preferably recorded at a predetermined location in the standard-exceeding recording area 2 of this CD-ROM. The verification routine VER comprises a pointer to this predetermined location.

Assume that this CD-ROM is being copied in a standard manner, for example in a home PC. Two steps are essential in this process. In a first step, the CD-ROM which is to be copied has to be read; the read information is recorded in a temporary memory, for example the hard disk of the said PC. In a second step, the information is sent from the said memory to CD writing equipment in order to be written to a CD-R. Since the CD reader in the first step and the CD writer in the second step operate within the standardization laid down by the Red Book, only the information from the standard recording area 1 of the CD-ROM is copied to the recording area of the CD-R. The copy CD therefore does contain the first 74 minutes of the CD-ROM to be copied, i.e. the modified application MODAPPL and the data DATA, but not the authenticity code CODE.

The standard operation of the original CD-ROM is as follows. A user places the CD-ROM in the CD-ROM station of his computer platform, such as for example a PC, and then starts the application APPL. The application APPL starts the verification routine VER, either immediately or at a suitable subsequent moment. The verification routine VER is designed to instruct the CD-ROM station to carry out a read instruction in the standard-exceeding recording area 2 at the predetermined location as defined by the said pointer. This read instruction will result in the said authenticity code CODE being read out. The verification routine VER is also designed to process the information received from the CD-ROM station and, if this information corresponds to the expected authenticity code CODE, to return with an agreement message to the application APPL. The application will then continue to function "normally".

If the user starts up a copy of the application APPL which has been recorded on a CD-R, the verification routine VER will again instruct the CD-ROM station to carry out a read instruction in the standard-exceeding recording area 2 at the said predetermined location as defined by the said pointer. This read instruction will result in an error message and/or the read information will not correspond to the authenticity code CODE. The verification routine VER is designed, in this situation, to return with a copy message to the application APPL. The application is designed to operate only in a copy mode in response to receiving the copy message. This copy mode may be designed as desired by the software supplier. For example, it is possible for the application not to function at all in the copy mode. However, it is also possible to choose to allow the application to run an amended program in the copy mode, for example a demonstration program.

It should be noted that writing the verification routine VER and incorporating it in the application APPL is normally the responsibility of the software supplier. The operation of the application APPL in the copy mode is also a matter for the software supplier.

Furthermore, it should be noted that it will be obvious to a person skilled in the art how a verification routine VER of this nature, operating as described above, and the interaction between a verification routine VER of this nature and an application APPL, can be implemented in computer language.

The present invention envisages that in future it will be possible for the recording capacity of CD-R discs to be greater than that which is currently the norm, for example 78 minutes or longer, and that it will be possible to manipulate a CD-ROM station in such a manner that the said station will not be limited to 74 minutes when reading and writing. The present invention can also be used for CD-ROMs whose physical dimensions are limited to 74 minutes. In such cases, a direct one-to-one copy of the original CD-ROM to the copy CD-R would be possible, including the authenticity code. Therefore, the verification routine VER would find the authenticity code even on a copy CD-R and would incorrectly regard the copy as an original. In order to prevent this, the present invention provides a copy protection which makes it virtually impossible to read the authenticity code. For this purpose, scrambled information is written to one or more positions in the standard-exceeding recording area 2 of the CD-ROM, not being the location of the authenticity code CODE, the scrambled information being such that the recording on the CD-ROM still complies with the Red Book standard but no longer complies with the Yellow Book standard. The scrambled information is written in front of the authenticity code, i.e. at a location between 74 minutes and the location of the authenticity code CODE. Preferably, scrambled information is also written after the authenticity code, i.e. at a location between the location of the authenticity code and 78 minutes. Furthermore, it is preferable to arrange a plurality of scrambled sections in the area between 74 minutes and the location of the authenticity code CODE and in the area between the location of the authenticity code and 78 minutes.

If an original CD-ROM which is written in such a manner according to the present invention is read by a CD-ROM station for the purpose of being copied, the CD-ROM station will read the first 74 minutes of the original CD-ROM correctly, but in the standard-exceeding recording area 2 the CD-ROM station will come up against the scrambled information. The CD-ROM station is unable to process this, is also unable to correct it, and will therefore break off reading. As a result, the authenticity code CODE is prevented from being recorded on the copy CD-R, since the CD-ROM station does not get as far as reading the position on the CD-ROM where the authenticity code CODE is situated.

An example of suitable information scrambling will now be described with reference to Figure 2.

As is known, information is written to a CD in the form of blocks 30 with a length of 2352 bytes. Each block 30 contains a header section 31, a data section 32, and a run-out section 33. The data section 32 contains the actual information bytes. The run-out section 33 contains, inter alia, error-correction bits. The header section 31 serves, inter alia, to achieve synchronization of the data-processing electronics with the actual speed of the data track and to indicate the start of the data section 32.

The above-described division of the information into blocks, the subdivision of the blocks into sections, and the lengths of the individual sections are laid down in the Red Book specification. The configuration of the header section 31 is laid down in section 14.1 of the Yellow Book specification. According to this specification, the header section 31 comprises an identification part and a synchronization part which consists of 12 bytes and in which the sequence is:
{(00) 10x(FF) (00)}.

An example of effective information scrambling within the context of the present invention is writing a sequence which deviates from the Yellow Book specification to the synchronization part of the header section 31 of a data block 30.

As has been mentioned, a scrambled data block of this nature, which will be denoted by the reference numeral 30', cannot be read by a CD-ROM station. However, it is also impossible for a CD-ROM station to simply skip a scrambled data block 30' of this nature and move on to the next data block: if a CD-ROM station comes up against a scrambled data block 30' of this nature during a read operation, the read operation will be broken off and an error message generated.

Figure 3 illustrates the structure of the standard-exceeding recording area 2 of a CD-ROM, where an authenticity code CODE has been recorded according to the present invention. CODE can be recorded in a single data block 30, but it is also possible for CODE to have a length which is greater than a single data block, as will be clear to a person skilled in the art. At least one scrambled data block 30' is present in the area between 74 minutes and the location of the data block(s) containing the authenticity code CODE. In the embodiment illustrated, a plurality of scrambled data blocks 30' of this nature are present in the area between 74 minutes and the location of the data block(s) 30 containing the authenticity code CODE. This plurality of scrambled data blocks 30' may be recorded next to one another or with a gap between them. Furthermore, figure 3 shows that preferably at least one scrambled data block 30' is present, in a similar manner, in the area between the location of the data block(s) 30 containing the authenticity code CODE and 78 minutes.

It will be clear to a person skilled in the art that the scope of the present invention is not limited to the examples discussed above, but rather that various amendments and modifications to these examples are possible without departing from the scope of the invention as defined in the appended claims. For example, it is possible for a plurality of authenticity codes CODE1, CODE2, etc. to be recorded in the standard-exceeding recording area of a CD-ROM, which authenticity codes may be identical or different, the verification routine VER containing pointers to the various authenticity codes and authenticity being accepted only if all the authenticity codes are detected. In this case, at least one scrambled data block 30' is preferably written between successive authenticity codes CODE1 CODE2, etc.

Furthermore, the present invention can also be employed if the upper limit of the standard recording area 1 of a CD-ROM is at a time different from 74 minutes.

Although the present invention is designed for use in the copy-protection of a CD-ROM and is eminently suitable for this purpose, the present invention is not limited to an application of this nature. In principle, the present invention can be used in combination with any desired information carrier. It is sufficient for the information carrier to have a first recording area where an application containing a verification routine and data can be recorded and a second recording area where an authenticity code can be recorded, wherein the recording of the authenticity code in the second recording area can be protected by storing scrambled information at an adjacent position in the second recording area, in such a manner that reading equipment for the said information carrier which operates in accordance with standard read protocols will break off a read procedure when the said scrambled information is read. As a result, it is possible to prevent the authenticity code from being copied from an original recording to a copy recording.

In the preferred example described, the authenticity code CODE and the scrambled information blocks 30' are written to the standard-exceeding part 2 of a CD-ROM. However, this is not necessary for the copy protection according to the present invention to function correctly. The authenticity code may also be recorded, for example, in a late part of the normal recording area 1, for example in the area between 70 and 74 minutes, in which case the scrambled information is also arranged in that area. In this case too, the area in question (70-74 minutes) will not be copied during copying of the CD-ROM to a CD-R, owing to the presence of the scrambled information. This variant can be used if the length of the actual information 10 is shorter than, in this example, 70 minutes.

In the example described, the actual information 10 contains both an application APPL and data DATA. However, the present invention does not apply exclusively to an information structure of this nature. Thus it will be clear that the embodiment of the example described can also readily be employed if the data DATA is absent from the actual information 10. However, the present invention can be used to protect the data DATA against illegal copying even if the actual information 10 consists exclusively of data DATA, i.e. it does not contain any application APPL. For example, it is possible to envisage a situation in which a software supplier supplies an application on an application CD-ROM and supplies one or more DATA packets which are intended for the said application on one or more data CD-ROMs. In that case, the application of the application CD-ROM will be designed to activate the verification routine VER of the data CD-ROM in question each time that data from a data CD-ROM is required. It is even possible for the verification routine VER to be situated on the application CD-ROM.

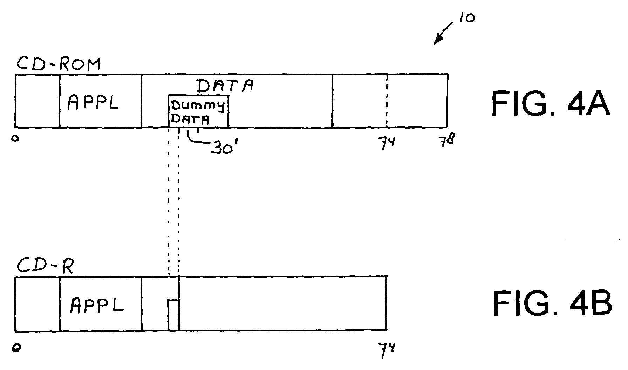

Furthermore, the use of a separate authenticity code CODE is not essential within the context of the present inventive idea. It is also possible to incorporate a read barrier 30' in the information which is to be recorded. This will be explained, with reference to figure 4, for the situation in which the actual information 10 comprises an application APPL and data DATA intended for the said application. When the application APPL is activated, it will, at certain moments, fetch data from DATA, for which purpose pointers to the location of the data required are always known to APPL. However, DATA comprises a part which will be referred to as DUMMYDATA, which does not contain any data required by APPL. In other words, all the data to which the pointers of APPL point are situated outside the DUMMYDATA area.

According to the present invention, at least one scrambled data block 30' is written to the area DUMMYDATA.

It should be noted that writing the application APPL and the data DATA is normally the responsibility of the software supplier. The software supplier therefore provides the information relating to the location of a part of the DATA which will never be approached by APPL, so that this part can be regarded as DUMMYDATA.

In this embodiment of the present invention, the actual information 10 can be recorded in the standard recording area 1 of an original CD-ROM (figure 4A); it is, therefore, not necessary to make use of the standard-exceeding recording area 2. If a copy of this CD-ROM is made, for example to CD-R, only that part of DATA which is situated in front of the read barrier 30' in DUMMYDATA will be copied, in a similar manner to what has been described above. A copy CD then contains only a part of the original data DATA (see figure 4B). The application will therefore function incompletely.

The amount of data DATA which the copy CD contains depends on the location of DUMMYDATA: the higher the play time at which DUMMYDATA is situated, the more DATA the copy CD contains. It is therefore possible for the software supplier to determine which part of DATA is available for functioning in copy mode and which part of DATA is available only in the normal or original mode.

In a similar manner, the application APPL may contain a DUMMYAPPL part, and the instructions present in that part will never be activated. A read barrier may then, as an alternative, be arranged in a DUMMYAPPL part of this nature.

## Claims

1. Method for recording, in a copy-protected manner, actual information (10) on an information carrier which is standardized in accordance with a predetermined standard, such as for example a CD-ROM, an authenticity code (CODE) being added to the said actual information (10), the actual information (10) being recorded in a first recording area (1) of the information carrier, and the said authenticity code being recorded at a predetermined location in a second recording area (2) of the information carrier, specifically in such a manner that a reading station which operates in accordance with the said standard cannot read the said authenticity code.

2. Method according to claim 1, in which at least one read barrier (30') for a reading station is arranged in the second recording area (2) of the information carrier, at a location between the first recording area (1) of the information carrier and the location of the authenticity code (CODE).

3. Method according to claim 1 or 2, in which at least one read barrier (30') for a reading station is arranged in the second recording area (2) of the information carrier, at a location on that side of the location of the authenticity code (CODE) which is remote from the first recording area (1).

4. Method according to any one of claims 1-3, wherein a plurality of authenticity codes (CODE1, CODE2, etc.) are added to the actual information (10) and wherein the said plurality of authenticity codes (CODE1, CODE2, etc.) are recorded at predetermined locations in the second recording area (2) of the information carrier.

5. Method according to claim 4, wherein at least one read barrier (30') for a reading station is arranged in the second recording area (2) of the information carrier, at a location between two successive authenticity codes (CODE1, CODE2, etc.).

6. Method according to claim 2, 3 or 5, wherein information is recorded on the standardized information carrier in the form of information blocks (3) with a header section (31), a data section (32) and a run-out section (33), the sequence of bytes in at least part of the header section (31) being prescribed in the said standard, and a read barrier (30') being provided by writing an information block (30') with a sequence of bytes in its header section (31) which deviates from the sequence in the said standard.

7. Method according to any one of the preceding claims, wherein a verification routine (VER) is added to the said actual information (10), a pointer to the said predetermined location of the authenticity code (CODE) on the standardized information carrier being associated with the said verification routine or pointers to the said predetermined locations of the authenticity codes (CODE1, CODE2, etc.) on the standardized information carrier being associated with the said verification routine; which verification routine (VER) is designed, if activated, to instruct a reading station to read the information which is present at the location(s) as determined by the said pointer(s) from an information carrier which is present in the said reading station.

8. Method according to claim 7, wherein the verification routine (VER) is designed to give an authenticity message to an application (APPL) if the information which is read by the said reading station at the said location(s) as determined by the said pointer(s) corresponds to the authenticity code (CODE; CODE1, CODE2, etc.), and wherein the verification routine (VER) is designed to give a copy message to the application (APPL) if the information which is read by the said reading station at the said location(s) as determined by the said pointer(s) deviates from the authenticity code (CODE; CODE1, CODE2, etc.), and/or if the read operation performed by the said reading station in response to the instruction received from the verification routine (VER) results in an error message.

9. Method according to claim 8, wherein the application (APPL) belongs to the actual information (10) which is recorded in the first recording area (1).

10. Method according to claim 8 or 9, wherein the application (APPL) is designed to operate normally in response to an authenticity message being received from the verification routine (VER) but to operate in a copy mode in response to a copy message being received from the verification routine (VER).

11. Information carrier comprising a first recording area (1) and a second recording area (2), wherein at least one authenticity code (CODE; CODE1, CODE2, etc.) is recorded in the said second recording area (2) by means of a method according to one of claims 1-10.

12. Information carrier according to claim 11, the information carrier being a CD-ROM, wherein the first recording area (1) is a standard recording area of the CD-ROM and the second recording area (2) is a standard-exceeding recording area of the CD-ROM.

13. Information carrier according to claim 12, wherein the standard recording area (1) of the CD-ROM extends from 0 to approximately 74 minutes, and wherein the standard-exceeding recording area of the CD-ROM extends from approximately 74 minutes to approximately 78 minutes.

14. Information carrier according to any one of claims 11-13, wherein a verification routine (VER) is stored in the first recording area (1) by means of a method according to claim 7.

15. Set comprising a first information carrier and a second information carrier, an application (APPL) being recorded in the first information carrier and data (DATA) being recorded in a first recording area of the second information carrier;
at least one authenticity code (CODE; CODE1, CODE2, etc.) being recorded in a second recording area of the second information carrier by means of a method according to one of claims 1-10;
a verification routine (VER) being recorded in the first recording area of the first information carrier or of the second information carrier, a pointer to the said predetermined location of the authenticity code (CODE) on the second information carrier being associated with the said verification routine, or pointers to the said predetermined locations of the authenticity codes (CODE1, CODE2, etc.) on the second information carrier being associated with the said verification routine; which verification routine (VER) is designed, if activated, to instruct a reading station to read the information which is present at the location(s) as determined by the said pointer(s) from an information carrier which is present in the said reading station;
and the verification routine (VER) being designed to give an authenticity message to the said application (APPL) if the information which is read by the said reading station at the said location(s) as determined by the said pointer(s) corresponds to the authenticity code (CODE; CODE1, CODE2, etc.), and the verification routine (VER) being designed to give a copy message to the said application (APPL) if the information which is read by the said reading station at the said location(s) as determined by the said pointer(s) deviates from the authenticity code (CODE; CODE1, CODE2, etc.), and/or if the read operation performed by the said reading station in response to the instruction received from the verification routine (VER) results in an error message.

16. Method for recording, in a copy-protected manner, actual information (10) on an information carrier which is standardized in accordance with a predetermined standard, such as for example a CD-ROM, at least part of the said information being recorded at a predetermined location in a recording area of the information carrier in such a manner that a reading station which operates in accordance with the said standard cannot read that part of the said information.

17. Method according to claim 16, wherein the actual information (10) is provided with dummy information (DUMMYDATA; DUMMYAPPL), and wherein at least one read barrier (30') for a reading station is arranged at the location of the said dummy information.

18. Method according to claim 17, wherein information is recorded on the standardized information carrier in the form of information blocks (30) with a header section (31), a data section (32) and a run-out section (33), the sequence of bytes in at least part of the header section (31) being prescribed in the said standard, and a read barrier (30') being provided by writing an information block (30') with a sequence of bytes in its header section (31) which deviates from the sequence in the said standard.

19. Information carrier, such as for example a CD-ROM, comprising a recording area in which actual information (10) is recorded by means of a method according to one of claims 16-18.
